# EUROPEAN PATENT APPLICATION

(11) **EP 4 553 237 A1**
(43) Date of publication of application: **14.05.2025**
(21) Application number: 23852479.7
(22) Date of filing: 03.08.2023
(51) Int. Cl.: E02F 9/26, E02F 9/24

(54) **WORK MACHINE SYSTEM, AND METHOD FOR CONTROLLING WORK MACHINE**

(30) Priority: 09.08.2022 JP 2022126940
(71) Applicant: Komatsu Ltd., Minato-ku Tokyo 107-8414 (JP)
(72) Inventor: NAITO, Toru, Tokyo 107-8414 (JP)
(74) Representative: Grünecker Patent- und Rechtsanwälte PartG mbB
(86) International application number: PCT/JP2023/028422
(87) International publication number: WO 2024/034513

(57) **Abstract**

A work machine system includes: a machine main body; a work implement attached to the machine main body; a travel unit that causes the machine main body to travel; an inclination sensor that senses a degree of inclination of the machine main body; an operator presence sensor that senses presence of an operator; a parking brake that brakes the travel unit; an operation device that receives an operation of activating the parking brake; and a controller that performs, when the operation device does not receive the operation, control to prevent the parking brake from being forgotten to be applied, on conditions that the presence of the operator is not sensed and the machine main body is inclined.

## Description

### TECHNICAL FIELD

The present disclosure relates to a work machine system and a method for controlling a work machine.

### BACKGROUND ART

A work machine including a work implement is conventionally known. As such a work machine, a work vehicle including a seating sensor is disclosed, for example, in Japanese Patent Laying-Open No. 2019-157543 (PTL 1). In this work vehicle, a control unit disables a steering operation performed with a steering lever when the seating sensor senses that an operator is not sitting on a driver's seat. Further, such a work machine includes, in addition to a service brake which is activated through operation of a brake pedal, a parking brake which is activated during parking.

### CITATION LIST

### PATENT LITERATURE

PTL 1: Japanese Patent Laying-Open No. 2019-157543

### SUMMARY OF INVENTION

### TECHNICAL PROBLEM

In the case where the work machine is parked on an inclined terrain, if the operator forgets to apply the parking brake and leaves the driver's seat (a seat for the operator to sit on), an event called a spontaneous start may occur, in which the work machine starts traveling due to causes other than the act of driving by the operator.

The present disclosure provides a work machine system and a method for controlling a work machine, which can suppress a spontaneous start of the work machine when an operator forgets to apply a parking brake and leaves a seat.

### SOLUTION TO PROBLEM

According to one aspect of the present disclosure, a work machine system includes: a machine main body to which a work implement is attached; a travel unit that causes the machine main body to travel; an inclination sensor that senses a degree of inclination of the machine main body; an operator presence sensor that senses presence of an operator; a parking brake that brakes the travel unit; an operation device that receives a first operation of activating the parking brake; and a controller that performs, when the operation device does not receive the first operation, control to prevent the parking brake from being forgotten to be applied, on conditions that the presence of the operator on a seat is not sensed and the machine main body is inclined.

According to another aspect of the present disclosure, a method for controlling a work machine includes: sensing, by a first sensor, whether or not an operator of a work machine is present; sensing, by a second sensor, a degree of inclination of a machine main body of the work machine; and when a parking brake that brakes a travel unit of the machine main body is not activated, performing, by a controller, control to prevent the parking brake from being forgotten to be applied, on conditions that presence of the operator is not sensed and the machine main body is inclined.

### ADVANTAGEOUS EFFECTS OF INVENTION

According to the present disclosure, a spontaneous start of a work machine can be suppressed when an operator forgets to apply a parking brake and leaves a seat.

### BRIEF DESCRIPTION OF DRAWINGS

Fig. 1 is an external view of a wheel loader according to an embodiment.
Fig. 2 is a diagram showing an operator's cab as viewed from an operator sitting on a seat.
Fig. 3 is a schematic diagram showing a configuration of the wheel loader.
Fig. 4 is a diagram representing a state in which a parking brake switch is moved from an off position to an on position.
Fig. 5 is a diagram representing a state in which the parking brake switch is moved from the on position to the off position.
Fig. 6 is a diagram for illustrating input to and output from a controller.
Fig. 7 is a flow diagram for illustrating a flow of control of an alarm device by the controller.
Fig. 8 is a flow diagram for illustrating a flow of another control of the alarm device by the controller.
Fig. 9 is a flow diagram for illustrating a flow of yet another control of the alarm device by the controller.
Fig. 10 is a diagram illustrating an exemplary configuration of a work machine system.

### DESCRIPTION OF EMBODIMENTS

Embodiments will be described hereinafter with reference to the drawings. In the following description, the same components are denoted by the same reference characters. Their names and functions are also the same. Therefore, detailed description thereof will not be repeated.

A wheel loader, which is an exemplary work machine, will be described hereinafter with reference to the drawings. The work machine is not limited to the wheel loader but may be any machine that travels, such as a motor grader, an excavator, and a dump truck. In the following description, the terms "upper," "lower," "front," "rear," "right" and "left" refer to directions with respect to an operator sitting on an operator's seat (seat).

First, an example in which a work machine system is implemented only by a wheel loader will be described. Next, an example in which a work machine system is implemented by a wheel loader and a remote control system will be described as a modification.

### <A. Overall Configuration>

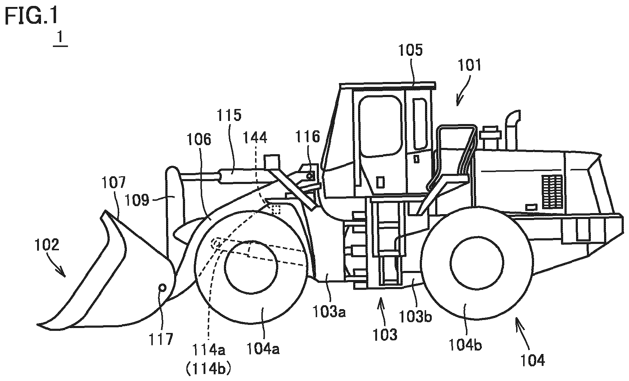

Fig. 1 is an external view of a wheel loader 1 according to the present embodiment. As shown in Fig. 1, wheel loader 1 includes a machine main body 101 and a work implement 102. Work implement 102 is attached to machine main body 101.

Machine main body 101 includes a vehicular body 103, a travel unit 104, and an operator's cab 105. Travel unit 104 includes wheels 104a and 104b. Wheel loader 1 is self-propelled as wheels 104a and 104b are rotationally driven, and can perform desired works with work implement 102.

Vehicular body 103 includes a front vehicular body portion 103a and a rear vehicular body portion 103b. Front vehicular body portion 103a and rear vehicular body portion 103b are coupled to each other so as to be swingable in a right-to-left direction.

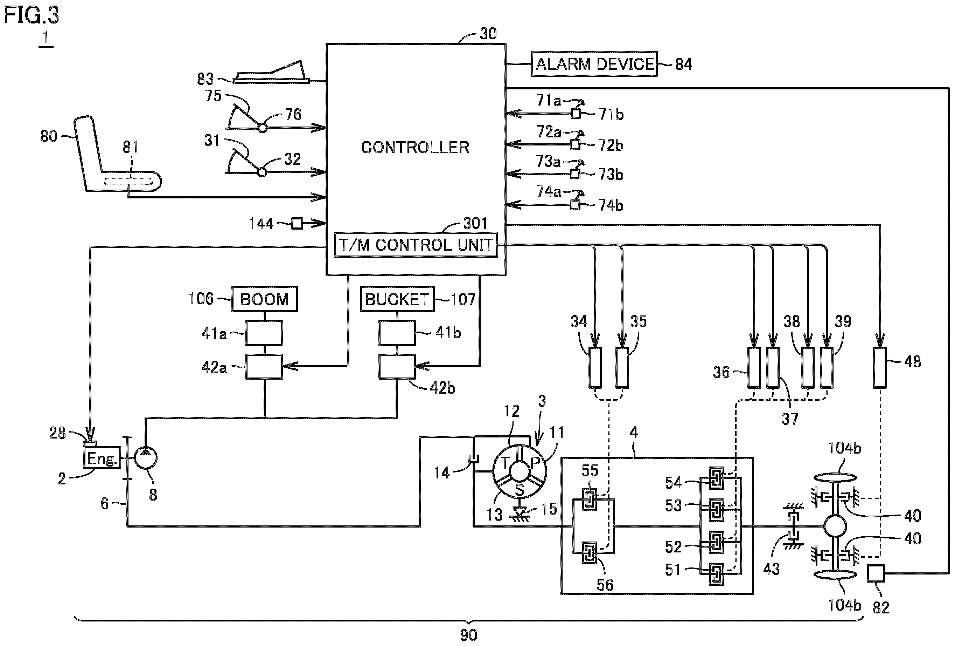

Work implement 102 and the pair of front wheels 104a are attached to front vehicular body portion 103a. Work implement 102 is arranged in front of vehicular body 103. Work implement 102 is driven by hydraulic oil from a hydraulic pump 8 (see Fig. 3). Work implement 102 includes a boom 106, a pair of lift cylinders 114a and 114b, a bucket 107, a bell crank 109, and a tilt cylinder 115.

Boom 106 is rotatably supported on front vehicular body portion 103a. Boom 106 has a base end portion swingably attached to front vehicular body portion 103a by a boom pin 116. Lift cylinders 114a and 114b each have one end attached to front vehicular body portion 103a. Lift cylinders 114a and 114b each have the other end attached to boom 106. Front vehicular body portion 103a and boom 106 are coupled to each other by lift cylinders 114a and 114b. As lift cylinders 114a and 114b extend and contract with hydraulic oil from hydraulic pump 8, boom 106 swings upward and downward around boom pin 116.

Bucket 107 is rotatably supported on a tip end of boom 106. Bucket 107 is swingably supported on a tip end portion of boom 106 by a bucket pin 117. Tilt cylinder 115 has one end attached to front vehicular body portion 103a. Tilt cylinder 115 has the other end attached to bell crank 109. Bell crank 109 and bucket 107 are coupled to each other by a not shown link device. Front vehicular body portion 103a and bucket 107 are coupled to each other by tilt cylinder 115, bell crank 109 and the link device. As tilt cylinder 115 extends and contracts with hydraulic oil from hydraulic pump 8, bucket 107 swings upward and downward around bucket pin 117.

Operator's cab 105 and the pair of rear wheels 104b are attached to rear vehicular body portion 103b. Operator's cab 105 is mounted on vehicular body 103. In operator's cab 105, a seat 80 for the operator to sit on (see Fig. 3), devices used for operations which will be described later, and the like are provided.

In the present example, an inclination sensor 144, which will be described in detail later, is provided in vehicular body 103. Inclination sensor 144 does not necessarily have to be provided at this position, and may be provided in operator's cab 105.

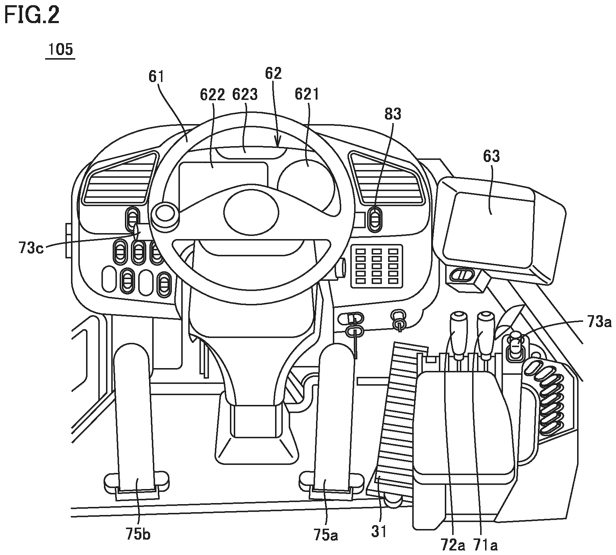

Fig. 2 is a diagram showing the operator's cab as viewed from the operator sitting on the seat. As shown in Fig. 2, operator's cab 105 includes a steering wheel 61, a meter panel 62, a side monitor 63, an accelerator pedal 31, brake pedals 75a and 75b, a boom control lever 71a, a bucket control lever 72a, forward/rearward travel switches 73a and 73c, and a parking brake switch 83. Meter panel 62 includes a speedometer 621, a front monitor 622, and a warning display area 623. In warning display area 623, a plurality of warning lamps capable of emitting light are arranged in a row.

Parking brake switch 83 is a switch for operating a parking brake 43 (see Fig. 3). In the present example, parking brake switch 83 is a rocker switch. Parking brake switch 83 is switched between an on position and an off position through an operation by the operator.

When the upper portion (upper end side) of parking brake switch 83 is pressed in a front direction, parking brake switch 83 is set to an on state. When parking brake switch 83 is set to the on state (on position), parking brake 43 (see Fig. 3) is activated. Parking brake 43 is thus applied.

When the lower portion (lower end side) of parking brake switch 83 is pressed in the front direction, parking brake switch 83 is set to an off state. When parking brake switch 83 is set to the off state (off position), parking brake 43 (see Fig. 3) is released. Parking brake 43 is thus loosened.

### <B. System Configuration>

Fig. 3 is a schematic diagram showing a configuration of wheel loader 1. As shown in Fig. 3, wheel loader 1 includes a controller 30. Controller 30 includes a T/M (transmission) controller unit 301. T/M controller unit 301 controls a transmission 4. T/M controller unit 301 may be provided separately from controller 30.

In operator's cab 105 (Fig. 2), seat 80 is provided for the operator to sit on. Seat 80 includes an operator presence sensor 81 that senses the presence of the operator. A result of the sensing by operator presence sensor 81 is sent to controller 30. In the present example, operator presence sensor 81 is a seating sensor. Operator presence sensor 81 is incorporated into seat 80 below a seating surface. Operator presence sensor 81 senses whether or not the operator is sitting on seat 80.

Operator presence sensor 81 sends a predetermined signal to controller 30 when the operator is sitting on seat 80. This is not a limitation, and operator presence sensor 81 may be configured to send a predetermined signal to controller 30 when the operator is not sitting on seat 80. This allows controller 30 to determine whether or not the operator is sitting on seat 80.

A driving-force transmission path 90 from an engine 2 to wheels 104b is provided with a transfer 6, a torque converter 3, transmission 4, parking brake 43, and a service brake 40. Wheel loader 1 is not limited to a vehicle having a torque converter mounted thereon. Wheel loader 1 may be a vehicle having an HST (Hydro Static Transmission) mounted thereon, a vehicle having an HMT (Hydro Mechanical Transmission) mounted thereon, a vehicle including a combination of a motor generator and a motor, and the like.

Engine 2 has an output shaft coupled to transfer 6. Transfer 6 is coupled to hydraulic pump 8. Part of output from engine 2 is transmitted to wheels 104b via transfer 6, torque converter 3 and transmission 4. Wheel loader 1 thus travels. A travel speed of wheel loader 1 can be controlled by accelerator pedal 31 provided in operator's cab 105. When the operator performs an operation of pressing accelerator pedal 31, an accelerator operation amount sensor 32 sends, to controller 30, a sensing signal indicating an amount of the operation of pressing accelerator pedal 31.

The remaining output from engine 2 is transmitted to hydraulic pump 8 via transfer 6. Hydraulic pump 8 is thus driven. Hydraulic pump 8 supplies, via a control valve 42a, hydraulic oil to lift cylinders 114a and 114b that drive boom 106. The upward and downward movement of boom 106 can be controlled by operating boom control lever 71a provided in operator's cab 105. Hydraulic pump 8 also supplies, via a control valve 42b, hydraulic oil to tilt cylinder 115 that drives bucket 107. The movement of bucket 107 can be controlled by operating bucket control lever 72a provided in operator's cab 105.

Torque converter 3 is provided between transfer 6 and transmission 4. Torque converter 3 includes a pump impeller 11, a turbine runner 12, a stator 13, a lock-up clutch 14, and a one-way clutch 15.

Transmission 4 includes a forward travel clutch 55 and a rearward travel clutch 56. Transmission 4 includes a first gear clutch 51, a second gear clutch 52, a third gear clutch 53, and a fourth gear clutch 54. An engagement pressure of each of clutches 51 to 56 is controlled by adjusting, by each of clutch control valves 34 to 39, a clutch hydraulic pressure supplied to each of clutches 51 to 56 in response to a clutch hydraulic pressure command signal sent from T/M controller unit 301 to each of clutch control valves 34 to 39.

Parking brake 43 brakes travel unit 104 (Fig. 1). Parking brake 43 is disposed between transmission 4 and service brake 40. Parking brake 43 is attached to the output shaft. Parking brake 43 is a negative brake that mainly serves to park wheel loader 1. Parking brake 43 is a brake of a wet multiplate type that can be switched between a braking state and a non-braking state.

Service brake 40 is disposed between parking brake 43 and wheels 104a, 104b. Service brake 40 is attached to an axle coupled to wheels 104b. Service brake 40 is a brake mainly used for deceleration or stop during travel. Service brake 40 is a so-called positive brake of a wet multiplate type that can be switched between a braking state and a non-braking state.

Controller 30 adjusts the accelerator pedal position based on the sensing signal from accelerator operation amount sensor 32, and sends a fuel injection amount command signal to an electronically controlled fuel injection device (not shown). An electronically controlled fuel injection device 28 determines the injection amount command signal, adjusts the amount of fuel injected into the cylinders, and controls the output from (number of rotations of) engine 2.

When boom control lever 71a is operated, a boom operation sensing unit 71b sends, to controller 30, a boom operation signal based on the operation. **In** response to the boom operation signal, controller 30 sends a boom hydraulic pressure command signal to control valve 42a. Control valve 42a determines the boom hydraulic pressure command signal, and controls the amount of hydraulic oil supplied from hydraulic pump 8 to lift cylinders 114a and 114b.

When bucket control lever 72a is operated, a bucket operation sensing unit 72b sends, to controller 30, a bucket operation signal based on the operation. In response to the bucket operation signal, controller 30 sends a bucket hydraulic pressure command signal to control valve 42b. Control valve 42b determines the bucket hydraulic pressure command signal, and controls the amount of hydraulic oil supplied from hydraulic pump 8 to tilt cylinder 115.

When forward/rearward travel switch 73a is operated, a forward/rearward travel switching sensing unit 73b sends, to T/M controller unit 301, a forward/rearward travel switching operation signal based on the operated position of forward/rearward travel switch 73a. In response to the forward/rearward travel switching operation signal, T/M controller unit 301 sends a clutch hydraulic pressure command signal to forward/rearward travel clutch control valves 34 and 35. Forward/rearward travel clutch control valves 34 and 35 determine the clutch hydraulic pressure command signal, and engage one of forward travel clutch 55 and rearward travel clutch 56.

When a gear shift lever 74a is operated, a gear shift sensing unit 74b sends, to T/M controller unit 301, a gear shift switching operation signal based on the operated position of gear shift lever 74a. In response to the gear shift switching operation signal, T/M controller unit 301 sends a clutch hydraulic pressure command signal to each of gear shift clutch control valves 36 to 39. Each of gear shift clutch control valves 36 to 39 determines the clutch hydraulic pressure command signal, and engages one of gear clutches 51 to 54 of transmission 4.

Brake pedal 75 supplies hydraulic oil based on the pressing operation by the operator, and adjusts an engagement pressure of service brake 40. Hydraulic oil based on a command from controller 30 is also supplied to service brake 40. Of the hydraulic oil by the operation of pressing brake pedal 75 and the hydraulic oil based on the command from controller 30, the hydraulic oil having a higher pressure is selected and supplied to service brake 40.

Parking brake switch 83 is a switch for operating parking brake 43, as described above. Parking brake switch 83 receives an operation of activating parking brake 43 and an operation of releasing parking brake 43.

The operation of activating parking brake 43 is an operation of making a switch from the off position to the on position. When parking brake switch 83 is moved to the on position, parking brake 43 is activated. The operation of releasing parking brake 43 is an operation of making a switch from the on position to the off position. When parking brake switch 83 is moved to the off position, parking brake 43 is released. The control of parking brake 43 through the operation of parking brake switch 83 will be described in detail later.

Controller 30 is connected to inclination sensor 144. Inclination sensor 144 senses a degree of inclination of machine main body 101. In the present example, inclination sensor 144 senses an angle of inclination of vehicular body 103.

In the present example, inclination sensor 144 is provided in vehicular body 103 as shown in Fig. 1. Inclination sensor 144 senses a pitch angle of vehicular body 103, and inputs a sensing signal to controller 30. As used herein, the direction around an axis passing through the center of gravity of wheel loader 1 and extending in the right-to-left direction is called a pitch direction. The pitch direction refers to the direction in which the front end of vehicular body 103 is lowered or raised with respect to the center of gravity of vehicular body 103. The pitch angle refers to the angle of inclination of vehicular body 103 in the pitch direction. The pitch angle is the angle of inclination of vehicular body 103 in the front-to-rear direction with respect to a reference plane such as a vertical direction or a horizontal direction.

Controller 30 is connected to a vehicle speed sensor 82 that senses a vehicle speed of wheel loader 1. Controller 30 obtains a result of the sensing from vehicle speed sensor 82. This allows controller 30 to determine whether or not wheel loader 1 is traveling.

Controller 30 is connected to an alarm device 84, which is an exemplary output device. Alarm device 84 issues an alarm based on an instruction from controller 30. Alarm device 84 includes, for example, at least one of side monitor 63 (or front monitor 622), a speaker, and an indication lamp (warning lamp). The speaker and the indication lamp may be provided inside of operator's cab 105, or may be provided outside of operator's cab 105 so as to issue the alarm to an outside of operator's cab 105. The speaker and the indication lamp may be provided inside and outside of operator's cab 105. The conditions (triggers) for issuing the alarm will be described later.

### <C. Parking Brake Control System>

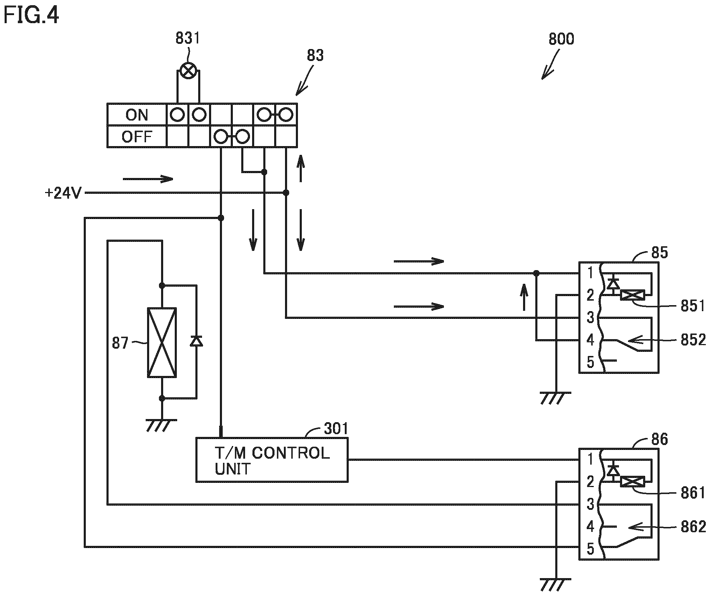

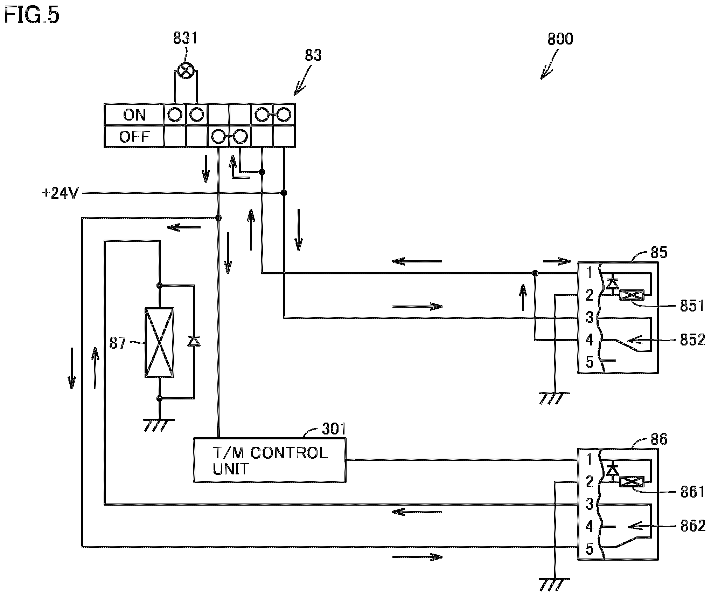

Figs. 4 and 5 are diagrams showing a parking brake control system that controls parking brake 43. Specifically, Figs. 4 and 5 show a state in which the engine is applied (started state). More specifically, Fig. 4 is a diagram representing a state in which parking brake switch 83 is moved from the off position to the on position. Fig. 5 is a diagram representing a state in which parking brake switch 83 is moved from the on position to the off position.

As shown in Fig. 4, a parking brake control system 800 includes parking brake switch 83, a parking brake relay 85, a parking brake solenoid valve relay 86, a parking brake solenoid valve 87, and T/M controller unit 301.

Parking brake switch 83 includes an LED indication lamp 831. LED indication lamp 831 is incorporated into parking brake switch 83. LED indication lamp 831 is illuminated on a condition that parking brake 43 is being activated.

Parking brake relay 85 includes a coil 851, a switch 852, and five terminals (#1 to #5) for external connection. Parking brake solenoid valve relay 86 includes a coil 861, a switch 862, and five terminals (#1 to #5) for external connection.

When parking brake switch 83 is moved to the on position, current flows from a 24 V power supply to coil 851 via the terminal #1 of parking brake relay 85. When current flows through coil 851, switch 852 is switched from the terminal #5 to the terminal #4 side. As a result, current flows from the 24 V power supply to coil 851 via parking brake switch 83 and switch 852 in this order. In this manner, current flows to coil 851 through two paths.

When parking brake switch 83 is at the on position, no current flows to parking brake solenoid valve relay 86. Accordingly, no current flows to parking brake solenoid valve 87. Parking brake solenoid valve 87 is thus de-energized. When parking brake solenoid valve 87 is de-energized, parking brake 43 is activated.

When parking brake switch 83 is at the on position, no current flows to T/M controller unit 301 via parking brake switch 83, either. Accordingly, T/M controller unit 301 can know that parking brake switch 83 is at the on position.

Then, when parking brake switch 83 is switched from the on position to the off position, current flows from the 24 V power supply to parking brake solenoid valve relay 86 via parking brake switch 83, as shown in Fig. 5. This current flows to parking brake solenoid valve 87 via the terminal #5 and the terminal #3 of parking brake solenoid valve relay 86 in this order. Parking brake solenoid valve 87 is thus energized. When parking brake solenoid valve 87 is energized, parking brake 43 is released.

When parking brake switch 83 is at the off position, current flows to T/M controller unit 301 via parking brake switch 83. Accordingly, T/M controller unit 301 can know that parking brake switch 83 is at the off position.

As described above, controller 30 (specifically, T/M controller unit 301) can obtain the state of the parking brake based on a current value or a voltage value of current flowing from parking brake switch 83. Specifically, controller 30 can determine whether the state of the parking brake is an activated state or a released state (non-activated state).

### <D. Issuing of Alarm>

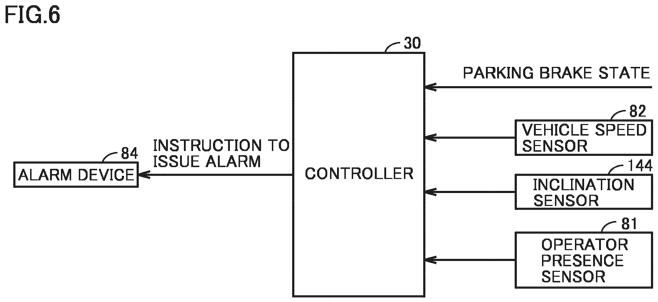

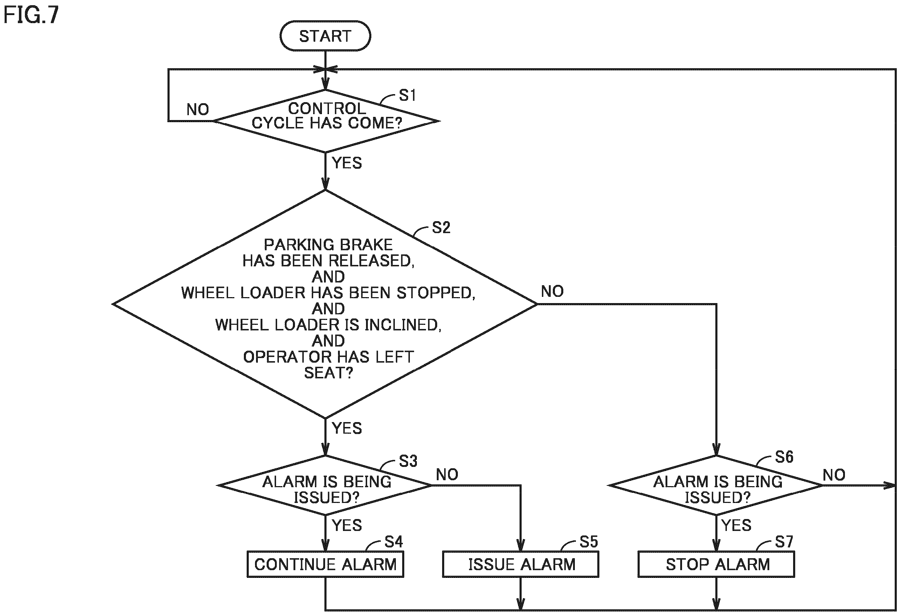

A process described with reference to Figs. 6 and 7 below is based on the premise that engine 2 is applied.

Fig. 6 is a diagram for illustrating input to and output from controller 30. As shown in Fig. 6, controller 30 obtains the state of parking brake 43. This allows controller 30 to determine whether parking brake 43 is in the activated state or the released state. Controller 30 obtains information of the vehicle speed of wheel loader 1 from vehicle speed sensor 82. This allows controller 30 to determine, based on the information of the vehicle speed, whether wheel loader 1 is traveling or being stopped.

Controller 30 obtains information of the degree of inclination (the angle of inclination in the present example) from inclination sensor 144. This allows controller 30 to determine whether or not machine main body 101 is inclined. Controller 30 obtains the result of the sensing from operator presence sensor 81. This allows controller 30 to determine whether the operator is sitting on seat 80 or has left seat 80.

Controller 30 sends, to alarm device 84, an instruction to issue an alarm on conditions that: parking brake 43 is in the released state; wheel loader 1 is in the stopped state; wheel loader 1 is in the inclined state; and the operator has left the seat. In this case, alarm device 84 issues a prescribed alarm. For example, alarm device 84 issues an alarm with at least one of display and sound. Preferably, the alarm includes information notifying the operator that parking brake 43 has not been applied. The alarm allows the operator to recognize that he or she has forgotten to apply parking brake 43.

Fig. 7 is a flow diagram for illustrating a flow of control of alarm device 84 by controller 30. As shown in Fig. 7, in step S1, controller 30 determines whether or not a control cycle has come. When it is determined that the control cycle has not come (NO in step S1), controller 30 waits until the control cycle comes.

When it is determined that the control cycle has come (YES in step S1), in step S2, controller 30 determines whether or not: parking brake 43 is in the released state; wheel loader 1 is in the stopped state; wheel loader 1 is in the inclined state; and the operator has left the seat. In this manner, controller 30 determines whether or not all four conditions are satisfied.

When it is determined that all four conditions are satisfied (YES in step S2), in step S3, controller 30 determines whether or not an alarm is being issued. When it is determined that an alarm is being issued (YES in step S3), in step S4, controller 30 causes alarm device 84 to continue issuing the alarm. When it is determined that an alarm is not being issued (NO in step S3), in step S5, controller 30 causes alarm device 84 to issue an alarm. After step S4 and step S5, controller 30 causes the process to proceed to step S1.

When it is determined that at least one of the four conditions is not satisfied (NO in step S2), in step S6, controller 30 determines whether or not an alarm is being issued. When it is determined that an alarm is being issued (YES in step S6), in step S7, controller 30 causes alarm device 84 to stop issuing the alarm. Controller 30 then causes the process to proceed to step S1. When it is determined that an alarm is not being issued (NO in step S6), controller 30 causes the process to proceed to step S1.

While the four conditions are used in the example described above, this is not a limitation. Of the four conditions, the condition that "wheel loader 1 is in the stopped state" is not essential.

### <E. Summary>

(1) A wheel loader 1, which is a work machine system, includes: a machine main body 101 to which a work implement 102 is attached; a travel unit 104 that causes machine main body 101 to travel; an inclination sensor 144 that senses a degree of inclination of machine main body 101; an operator presence sensor 81 that senses presence of an operator; a parking brake 43 that brakes travel unit 104; a parking brake switch 83 that receives an on operation of activating parking brake 43; and a controller 30 that performs, when parking brake switch 83 does not receive the on operation, control to prevent parking brake 43 from being forgotten to be applied, on conditions that the presence of the operator is not sensed and machine main body 101 is inclined.
   According to such a configuration, when the operator stops wheel loader 1 on an inclined terrain without applying parking brake 43 and leaves the seat, the control to prevent parking brake 43 from being forgotten to be applied is performed. According to wheel loader 1, therefore, a spontaneous start of wheel loader 1 can be suppressed.
(2) Controller 30 performs the control to prevent parking brake 43 from being forgotten to be applied, on a condition that wheel loader 1 is not traveling. According to such a configuration, the occurrence of a situation as described below can be prevented.
   During travel, the operator may be temporarily separated from seat 80 due to vibration of wheel loader 1. In this case, controller 30 determines, based on the result of the sensing by operator presence sensor 81, that the operator has left the seat. By adding "wheel loader 1 is not traveling" to the conditions for automatic activation of parking brake 43, therefore, automatic activation of parking brake 43 can be prevented even when it is determined that the operator has left the seat due to vibration of wheel loader 1.
(3) Wheel loader 1 includes an alarm device 84. Controller 30 causes, as the control to prevent the parking brake from being forgotten to be applied, alarm device 84 to issue an alarm. According to such a configuration, the operator can recognize that he or she has forgotten to apply parking brake 43.
(4) When the presence of the operator is sensed, when the inclination of machine main body 101 is no longer sensed, or when parking brake switch 83 receives the on operation, after causing alarm device 84 to issue the alarm, controller 30 causes the issuing of the alarm to be stopped. According to such a configuration, the operator does not have to perform an operation of stopping the issuing of the alarm.
(5) Alarm device 84 issues the alarm to an outside of an operator's cab 105. According to such a configuration, even when the operator leaves operator's cab 105 without activating parking brake 43, a person outside of the vehicle can be made aware of the alarm.

### <F. Modifications>

### (1) First Modification

Next, a configuration will be described in which an alarm is issued and parking brake 43 is automatically activated when the above-described four conditions are satisfied. For the sake of convenience of description, it is assumed below that parking brake switch 83 is at the off position (parking brake 43 is in the released state), as shown in Fig. 5.

Controller 30 sends, to alarm device 84, an instruction to issue an alarm on conditions that: parking brake 43 is in the released state; wheel loader 1 is in the stopped state; wheel loader 1 is in the inclined state; and the operator has left the seat. Further, in the present modification, controller 30 sends a command signal for parking brake 43 to parking brake control system 800. Specifically, controller 30 sends, to parking brake solenoid valve relay 86, a command to switch the connection destination of switch 862 from the terminal #5 to the terminal #4 side.

When the connection destination of switch 862 is switched from the terminal #5 to the terminal #4 side, no current flows to parking brake solenoid valve 87. Parking brake solenoid valve 87 is thus de-energized. When parking brake solenoid valve 87 is de-energized, parking brake 43 is activated.

According to such a configuration, the alarm can be issued and parking brake 43 can be automatically activated when the above-described four conditions are satisfied. In addition, when it is determined at least one of the above-described four conditions is no longer satisfied, controller 30 can cause parking brake 43 to be released again by causing the connection destination of switch 862 to be switched from the terminal #4 to the terminal #5 side.

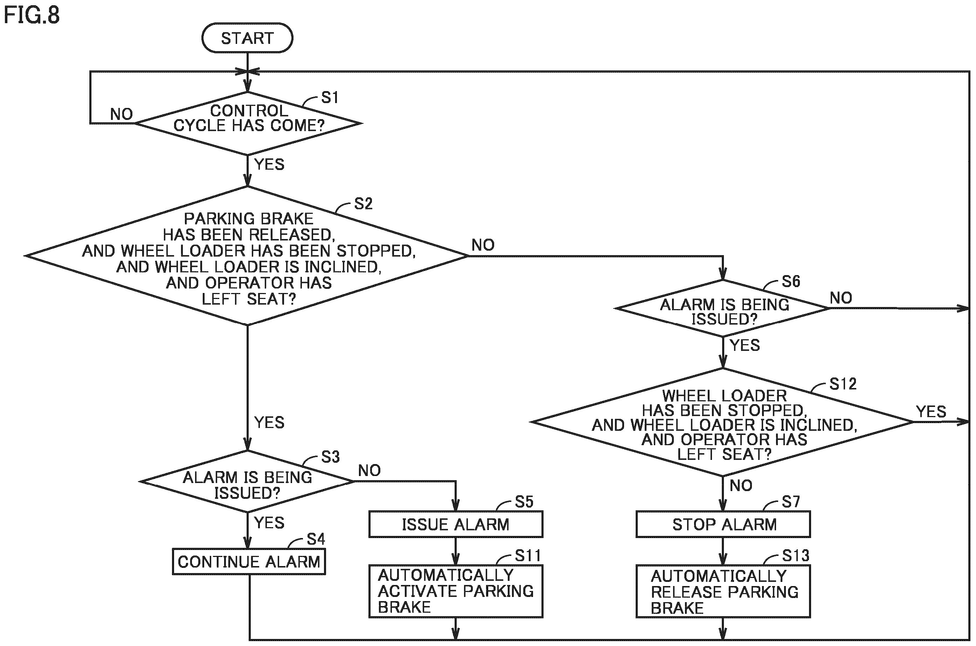

Fig. 8 is a flow diagram for illustrating a flow of control of alarm device 84 and parking brake 43 by controller 30. The flow diagram shown in Fig. 8 is different from the flow diagram in Fig. 7 in that it further includes steps S11 to S13.

In the present modification, after step S5, controller 30 causes parking brake 43 to be automatically activated in step S11. Specifically, controller 30 causes the connection destination of switch 862 to be switched from the terminal #5 to the terminal #4 side.

After a positive determination is made in step S6 (YES in step S6), in step S12, controller 30 determines whether or not: wheel loader 1 is in the stopped state; wheel loader 1 is in the inclined state; and the operator has left the seat. In this manner, controller 30 determines whether or not all three conditions are satisfied. When it is determined that all three conditions are satisfied (YES in step S12), controller 30 causes the process to proceed to step S1. When it is determined that at least one of the three conditions is not satisfied (NO in step S12), controller 30 causes the process to proceed to step S7 and causes the issuing of the alarm to be stopped.

After step S7, controller 30 causes parking brake 43 to be automatically released in step S13. Specifically, controller 30 causes the connection destination of switch 862 to be switched from the terminal #4 to the terminal #5 side.

Step S5 and step S11 may be performed in a reverse order. Similarly, step S7 and step S13 may be performed in a reverse order.

As described above, controller 30 causes alarm device 84 to issue an alarm and causes parking brake 43 to be activated, as the control to prevent parking brake 43 from being forgotten to be applied. According to such a configuration, in addition to recognizing that he or she has forgotten to apply parking brake 43, the operator does not have to perform the operation of activating parking brake 43.

Controller 30 causes the issuing of the alarm to be stopped and causes parking brake 43 to be automatically released when the seating of the operator is sensed or when the inclination of machine main body 101 is no longer sensed, for example, after controller 30 causes alarm device 84 to issue the alarm. According to such a configuration, the issuing of the alarm can be automatically stopped, and automatically activated parking brake 43 can be automatically released.

While the four conditions are used in the example described in the present modification as well, this is not a limitation. Of the four conditions, the condition that "wheel loader 1 is in the stopped state" is not essential.

Both of the control to cause alarm device 84 to issue an alarm and the control to automatically activate parking brake 43 are performed in the present modification. However, of these two controls, only the control to automatically activate parking brake 43 may be performed. This is also applicable to a "second modification" which will be described later.

### (2) Second Modification

In the configuration described in the first modification above, parking brake 43 is automatically released when at least one of the four conditions is no longer satisfied (step S12 in Fig. 8). However, this is not a limitation, and parking brake 43 may be released on a condition that an operation by the operator for releasing parking brake 43 is received.

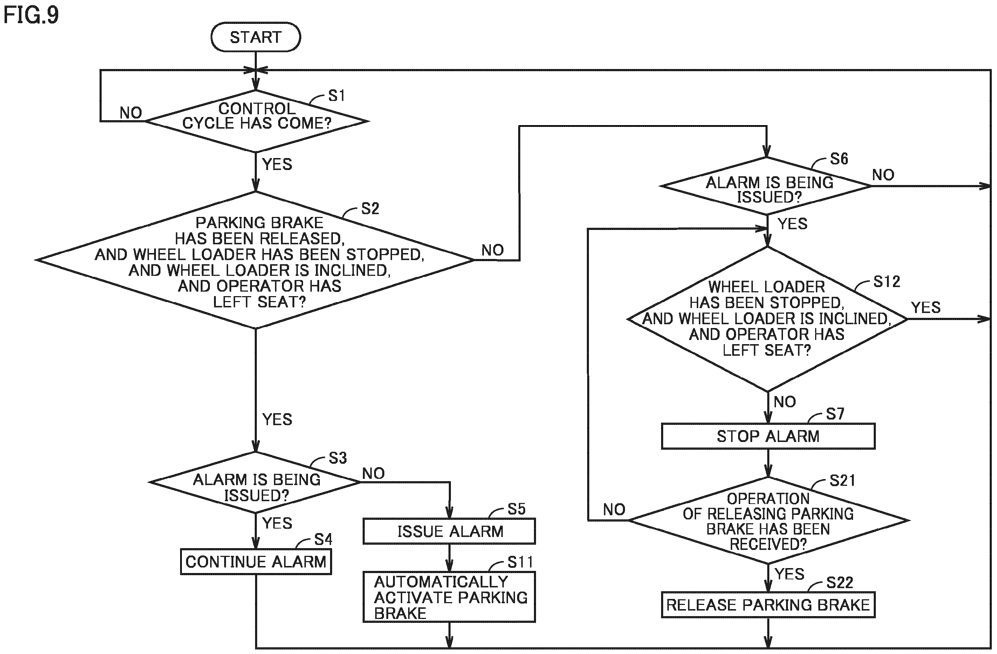

Fig. 9 is a flow diagram for illustrating a flow of control of alarm device 84 by controller 30. The flow diagram shown in Fig. 9 includes step S21 and step S22 instead of step S13 in Fig. 7.

In step S21, controller 30 determines whether or not an operation of releasing parking brake 43 using parking brake switch 83 has been received. When it is determined that the releasing operation has not been received (NO in step S21), controller 30 causes the process to proceed to step S12.

When it is determined that the releasing operation has been received (YES in step S21), in step S22, controller 30 causes parking brake 43 to be released. Specifically, controller 30 performs control to switch the connection destination of switch 862 from the terminal #4 to the terminal #5 side. For example, in response to receiving an operation by the operator for temporarily changing parking brake switch 83, which is at the off position immediately after the alarm is stopped (after step S7), to the on position, and then returning it to the off position, controller 30 performs control to switch the connection destination of switch 862 from the terminal #4 to the terminal #5 side. This operation is an exemplary operation for releasing parking brake 43, and this is not a limitation.

As described above, parking brake switch 83 further receives the operation of releasing parking brake 43. When parking brake switch 83 receives the above-described operation after the control to activate parking brake 43 is performed as the control to prevent the parking brake from being forgotten to be applied, wheel loader 1 releases parking brake 43. According to such a configuration, the issuing of the alarm can be automatically stopped, and automatically activated parking brake 43 can be released through the operation of parking brake switch 83 by the operator.

### (3) Third Modification

While the engine is illustrated as a motive power source (prime mover) of wheel loader 1, this is not a limitation. The motive power source may be a motor. Alternatively, the motive power source may be an engine and a motor.

### (4) Fourth Modification

While wheel loader 1 including operator's cab 105 is illustrated in the example described above, this is not a limitation. Wheel loader 1 may include a canopy instead of operator's cab 105.

### (5) Fifth Modification

In the exemplary configuration described above, of parking brake 43 and service brake 40, only parking brake 43 is automatically activated when the above-described conditions are satisfied. However, this is not a limitation. Wheel loader 1 may automatically activate service brake 40 in addition to parking brake 43 when the above-described conditions are satisfied. Alternatively, wheel loader 1 may automatically activate service brake 40 instead of parking brake 43 when the above-described conditions are satisfied.

### (6) Sixth Modification

In the present modification, an example will be described in which a work machine system is implemented by a wheel loader and a remote control system.

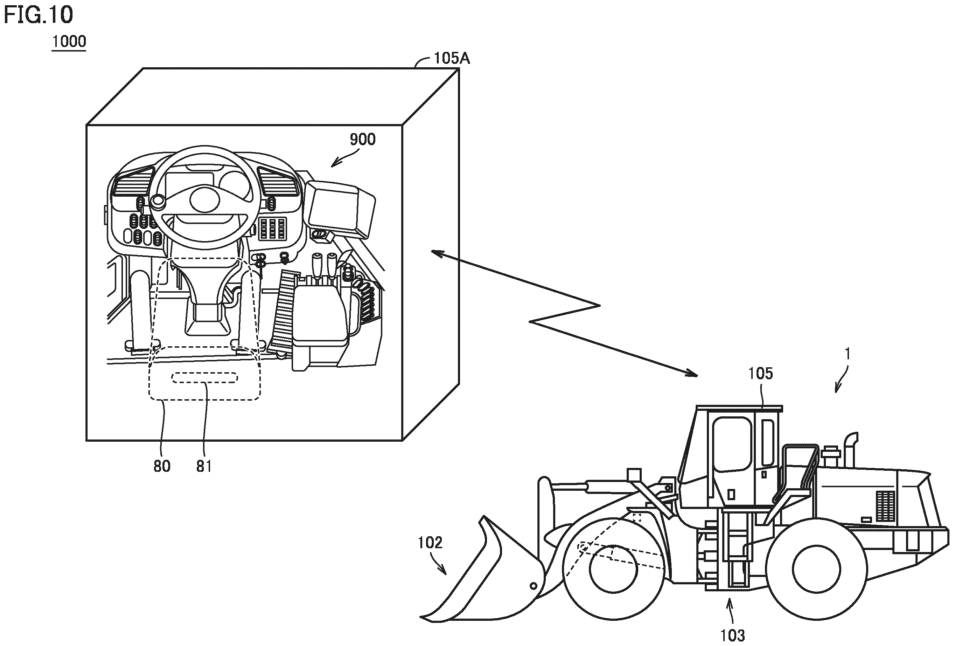

Fig. 10 is a diagram illustrating an exemplary configuration of a work machine system. As shown in Fig. 10, a work machine system 1000 includes wheel loader 1 and a remote control system 900. Remote control system 900 is provided in a remote control cab 105A.

Remote control system 900 includes the same equipment as that provided in operator's cab 105 of wheel loader 1. Remote control cab 105A provides the same steering environment as that of operator's cab 105 to the operator of wheel loader 1.

Remote control system 900 wirelessly communicates with wheel loader 1. A command from remote control system 900 is sent to controller 30 of wheel loader 1. Such a configuration allows the operator to steer wheel loader 1 without sitting on seat 80 in operator's cab 105 of wheel loader 1. The operator can steer wheel loader 1 while sitting on seat 80 in remote control cab 105A.

Even when the work machine system includes remote control system 900, wheel loader 1 performs the control to prevent parking brake 43 from being forgotten to be applied, as described in the first embodiment. According to such control, similar effects to those described in the first embodiment can be obtained in the present embodiment as well. The details are described below.

In the case where remote steering of wheel loader 1 is performed in remote control cab 105A, remote control cab 105A is not inclined even when wheel loader 1 is parked on an inclined terrain. Thus, seat 80 in remote control cab 105A is not inclined, either. Accordingly, when wheel loader 1 is parked on an inclined terrain, the operator cannot intuitively recognize that wheel loader 1 (machine main body 101) is inclined.

In the case where wheel loader 1 is remotely steered from remote control cab 105A, therefore, the operator is more likely to forget to apply parking brake 43 than when steering wheel loader 1 while actually riding on wheel loader 1. Thus, the control to prevent parking brake 43 from being forgotten to be applied as described above is particularly suitable when wheel loader 1 is remotely steered.

### (7) Seventh Modification

In the example described above, the seating sensor provided in seat 80 is illustrated as operator presence sensor 81. However, this is not a limitation. It is sufficient if operator presence sensor 81 can sense the absence of the operator in operator's cab 105 or remote control cab 105A. For example, operator presence sensor 81 may be provided in an armrest. Operator presence sensor 81 may be a human detection sensor using infrared light and the like.

### <Additional Aspects>

The description above includes features additionally described below.

### (Additional Aspect 1)

A work machine system comprising:
a machine main body;
a work implement attached to the machine main body;
a travel unit that causes the machine main body to travel;
an inclination sensor that senses a degree of inclination of the machine main body;
an operator presence sensor that senses presence of an operator;
a parking brake that brakes the travel unit;
an operation device that receives a first operation of activating the parking brake; and
a controller that performs, when the operation device does not receive the first operation, control to prevent the parking brake from being forgotten to be applied, on conditions that the presence of the operator is not sensed and the machine main body is inclined.

### (Additional Aspect 2)

The work machine system according to Additional Aspect 1, wherein the controller performs the control to prevent the parking brake from being forgotten to be applied, on a condition that the machine main body is not traveling.

### (Additional Aspect 3)

The work machine system according to Additional Aspect 1 or 2, further comprising an output device, wherein
the controller causes, as the control to prevent the parking brake from being forgotten to be applied, the output device to issue an alarm.

### (Additional Aspect 4)

The work machine system according to Additional Aspect 3, wherein when the presence of the operator is sensed, when the inclination of the machine main body is no longer sensed, or when the operation device receives the first operation, after causing the output device to issue the alarm, the controller causes the issuing of the alarm to be stopped.

### (Additional Aspect 5)

The work machine system according to Additional Aspect 3 or 4, further comprising an operator's cab, wherein
the output device issues the alarm to an outside of the operator's cab.

### (Additional Aspect 6)

The work machine system according to Additional Aspect 1 or 2, wherein the controller causes, as the control to prevent the parking brake from being forgotten to be applied, the parking brake to be activated.

### (Additional Aspect 7)

The work machine system according to Additional Aspect 6, wherein
the operation device further receives a second operation of releasing the parking brake, and
the work machine system causes the parking brake to be released when the operation device receives the second operation after control to activate the parking brake is performed as the control to prevent the parking brake from being forgotten to be applied.

### (Additional Aspect 8)

The work machine system according to Additional Aspect 6, further comprising an output device, wherein
the controller
further causes, as the control to prevent the parking brake from being forgotten to be applied, the output device to issue an alarm, and
when the presence of the operator is sensed or when the inclination of the machine main body is no longer sensed after causing the output device to issue the alarm, causes the issuing of the alarm to be stopped and causes the parking brake to be automatically released.

### (Additional Aspect 9)

The work machine system according to Additional Aspect 6, further comprising an output device, wherein
the controller
further causes, as the control to prevent the parking brake from being forgotten to be applied, the output device to issue an alarm, and
when the presence of the operator is sensed or when the inclination of the machine main body is no longer sensed after causing the output device to issue the alarm, causes the issuing of the alarm to be stopped, and on a condition that the operation device receives a second operation of releasing the parking brake, causes the parking brake to be released.

### (Additional Aspect 10)

The work machine system according to any one of Additional Aspects 1 to 9, wherein the work machine system is a work machine.

### (Additional Aspect 11)

The work machine system according to any one of Additional Aspects 1 to 9, comprising a work machine including the machine main body, the work implement, the travel unit, the inclination sensor, and the parking brake, wherein
the operator presence sensor and the operation device are provided in a remote control cab from which the work machine is remotely steered.

### (Additional Aspect 12)

A method for controlling a work machine, the method comprising:
sensing, by a first sensor, whether or not an operator of a work machine is present;
sensing, by a second sensor, a degree of inclination of a machine main body of the work machine; and
when a parking brake that brakes a travel unit of the machine main body is not activated, performing, by a controller, control to prevent the parking brake from being forgotten to be applied, on conditions that presence of the operator is not sensed and the machine main body is inclined.

It should be construed that embodiments disclosed herein are given by way of illustration in all respects, not limited to the foregoing details only. It is intended that the scope of the present invention is defined by claims, and encompasses all modifications and variations equivalent in meaning and scope to the claims.

### REFERENCE SIGNS LIST

1 wheel loader; 2 engine; 3 torque converter; 4 transmission; 6 transfer; 8 hydraulic pump; 30 controller; 31 accelerator pedal; 40 service brake; 43 parking brake; 61 steering wheel; 62 meter panel; 63 side monitor; 71a boom control lever; 72a bucket control lever; 73a, 73c forward/rearward travel switch; 74a gear shift lever; 75a, 75b brake pedal; 80 seat; 81 operator presence sensor; 82 vehicle speed sensor; 83 parking brake switch; 84 alarm device; 85 parking brake relay; 86 parking brake solenoid valve relay; 87 parking brake solenoid valve; 90 driving-force transmission path; 101 machine main body; 102 work implement; 103 vehicular body; 104 travel unit; 105 operator's cab; 105A remote control cab; 106 boom; 107 bucket; 144 inclination sensor; 301 T/M controller unit; 621 speedometer; 622 front monitor; 623 warning display area; 800, 800A parking brake control system; 831 warning lamp; 851, 861 coil; 852, 862 switch; 900 remote control system; 1000 work machine system.

## Claims

1. A work machine system comprising:
a machine main body to which a work implement is attached;
a travel unit that causes the machine main body to travel;
an inclination sensor that senses a degree of inclination of the machine main body;
an operator presence sensor that senses presence of an operator;
a parking brake that brakes the travel unit;
an operation device that receives a first operation of activating the parking brake; and
a controller that performs, when the operation device does not receive the first operation, control to prevent the parking brake from being forgotten to be applied, on conditions that the presence of the operator is not sensed and the machine main body is inclined.

2. The work machine system according to claim 1, wherein the controller performs the control to prevent the parking brake from being forgotten to be applied, on a condition that the machine main body is not traveling.

3. The work machine system according to claim 1 or 2, further comprising an output device, wherein
the controller causes, as the control to prevent the parking brake from being forgotten to be applied, the output device to issue an alarm.

4. The work machine system according to claim 3, wherein when the presence of the operator is sensed, when the inclination of the machine main body is no longer sensed, or when the operation device receives the first operation, after causing the output device to issue the alarm, the controller causes the issuing of the alarm to be stopped.

5. The work machine system according to claim 3, further comprising an operator's cab, wherein
the output device issues the alarm to an outside of the operator's cab.

6. The work machine system according to claim 1 or 2, wherein the controller causes, as the control to prevent the parking brake from being forgotten to be applied, the parking brake to be activated.

7. The work machine system according to claim 6, wherein
the operation device further receives a second operation of releasing the parking brake, and
the work machine system causes the parking brake to be released when the operation device receives the second operation after control to activate the parking brake is performed as the control to prevent the parking brake from being forgotten to be applied.

8. The work machine system according to claim 6, further comprising an output device, wherein
the controller
further causes, as the control to prevent the parking brake from being forgotten to be applied, the output device to issue an alarm, and
when the presence of the operator is sensed or when the inclination of the machine main body is no longer sensed after causing the output device to issue the alarm, causes the issuing of the alarm to be stopped and causes the parking brake to be automatically released.

9. The work machine system according to claim 6, further comprising an output device, wherein
the controller
further causes, as the control to prevent the parking brake from being forgotten to be applied, the output device to issue an alarm, and
when the presence of the operator is sensed or when the inclination of the machine main body is no longer sensed after causing the output device to issue the alarm, causes the issuing of the alarm to be stopped, and on a condition that the operation device receives a second operation of releasing the parking brake, causes the parking brake to be released.

10. The work machine system according to claim 1, wherein the work machine system is a work machine.

11. The work machine system according to claim 1, comprising a work machine including the machine main body, the work implement, the travel unit, the inclination sensor, and the parking brake, wherein
the operator presence sensor and the operation device are provided in a remote control cab from which the work machine is remotely steered.

12. A method for controlling a work machine, the method comprising:
sensing, by a first sensor, whether or not an operator of a work machine is present;
sensing, by a second sensor, a degree of inclination of a machine main body of the work machine; and
when a parking brake that brakes a travel unit of the machine main body is not activated, performing, by a controller, control to prevent the parking brake from being forgotten to be applied, on conditions that presence of the operator is not sensed and the machine main body is inclined.
